# EUROPÄISCHE PATENTSCHRIFT

(11) **EP 4 416 417 B1**
(45) Veröffentlichungstag und Bekanntmachung des Hinweises auf die Patenterteilung: **08.10.2025**
(21) Anmeldenummer: 22768356.2
(22) Anmeldetag: 19.08.2022
(51) Int. Cl.: B60K 11/02, F01P 7/16

(54) **KÜHLMITTELVENTIL, KÜHLSYSTEM UND KRAFTFAHRZEUG MIT EINEM KÜHLSYSTEM**
COOLANT VALVE, COOLING SYSTEM, AND MOTOR VEHICLE COMPRISING A COOLING SYSTEM
SOUPAPE D'AGENT DE REFROIDISSEMENT, SYSTÈME DE REFROIDISSEMENT ET VÉHICULE AUTOMOBILE COMPRENANT UN SYSTÈME DE REFROIDISSEMENT

(30) Priorität: 13.10.2021 DE 102021126508
(43) Veröffentlichungstag der Anmeldung: 21.08.2024
(73) Patentinhaber: HELLA GmbH & Co. KGaA, 59552 Lippstadt (DE)
(72) Erfinder: TIEMEYER, Sebastian, 44143 Dortmund (DE)
(74) Vertreter: Wichmann, Jörg
(86) Internationale Anmeldenummer: PCT/EP2022/073179
(87) Internationale Veröffentlichungsnummer: WO 2023/061643

(56) Entgegenhaltungen:
- WO-A1-2021/004418
- WO-A2-2017/223232
- US-A- 5 275 201
- US-A1- 2021 164 579

## Beschreibung

Die vorliegende Erfindung bezieht sich auf ein Kühlmittelventil für ein Kühlsystem eines Kraftfahrzeugs nach dem Oberbegriff des Anspruchs 1, ein Kühlsystem für ein Kraftfahrzeug und ein entsprechendes Kraftfahrzeug.

Ein Kühlmittelventil nach dem Oberbegriff des Anspruchs 1 ist aus dem Dokument US 2021/164579 A1 bekannt.

Derartige Kühlmittelventile für Kühlsysteme, Kühlsysteme und damit ausgestattete Kraftfahrzeuge sind aus dem Stand der Technik in zahlreichen Ausführungsvarianten bereits bekannt. Die bekannten Kühlmittelventile für Kühlsysteme umfassen ein Ventilgehäuse mit einer Mehrzahl von Gehäuseöffnungen, jeweils zum strömungsleitenden Anschluss einer Kühlmittelleitung des Kühlsystems, mindestens einen in dem Ventilgehäuse drehbar angeordneten Ventilkörper zur automatischen strömungsleitenden Verbindung von mindestens zwei der Gehäuseöffnungen in Abhängigkeit einer Drehlage des mindestens einen Ventilkörpers und mindestens eine zwischen dem Ventilgehäuse und dem mindestens einen Ventilkörper angeordnete Ventildichtung zur Abdichtung des Kühlmittelventils.

Kraftfahrzeuge mit elektrischen Antrieben weisen gegenüber Fahrzeugen mit Verbrennungsmotoren beispielsweise den Nachteil auf, dass eine Verteilung der durch den Motor erzeugten Wärme komplexere Anforderungen an ein Kühlsystem der Kraftfahrzeuge stellt. Während bei einem Verbrennungsmotor lediglich die Motorwärme durch einen Kühlmittelkreislauf abgeführt werden muss, welches auch im Falle einer zusätzlichen Nutzung der Motorwärme zur Innenraumbeheizung des Fahrzeugs nur einen Kühlmittelkreislauf erfordert, benötigen elektrisch betriebene Fahrzeuge meist mehrere, voneinander getrennte Kühlmittelkreisläufe. Einerseits muss überschüssige Motorenwärme abgeführt werden, andererseits müssen eine Fahrzeugbatterie und der Fahrzeuginnenraum, je nach Umgebungstemperatur des Fahrzeugs, entweder gekühlt oder erwärmt werden, um eine optimale Funktion des elektrisch betriebenen Kraftfahrzeugs sicher zu stellen. Weiter muss die Fahrzeugbatterie, zum Beispiel im Falle niedriger Umgebungstemperaturen, auch dann beheizt werden, wenn keine überschüssige Motorenwärme abgeführt werden muss oder wenn das Fahrzeug zwar in Betrieb genommen wurde, ein Motor des Fahrzeugs aber keine oder zumindest noch keine nennenswerte Abwärme produziert. Neben einer Kühlvorrichtung für das Kühlmittel eines Kühlmittelkreislaufs ist daher in der Regel auch eine

Erwärmungsvorrichtung notwendig, die im Bedarfsfall eine Kühlmitteltemperatur erhöht. Um die Motortemperatur, die Batterietemperatur sowie die Innenraumtemperatur eines Kraftfahrzeugs effizient regeln zu können sind daher, anders als bei Fahrzeugen mit Verbrennungsmotoren, meist mehrere voneinander separate Kühlmittelkreisläufe nötig. Diese Kühlmittelkreisläufe müssen durch Kühlsysteme für multiple Kühlmittelkreisläufe gespeist und geregelt werden.

Die bekannten Kühlsysteme für Kraftfahrzeuge umfassen mehrere Kühlmittelkreisläufe, aufweisend einen Kühlmitteltank mit einem Innenraum, der dazu eingerichtet ist, ein Kühlmittel zu bevorraten, mehrere Kühlmittelleitungen, welche dazu eingerichtet sind, das Kühlmittel aus dem Kühlmitteltank in zumindest einen Kühlmittelkreislauf einzuleiten, und eine Tankelektronik, welche dazu eingerichtet ist, das jeweilige Kühlsystem zu steuern.

Ein Beispiel für die Speisung und Regelung mehrerer Kühlmittelkreisläufe für ein Elektrofahrzeug wird durch das Dokument WO 2017 223 232 A2 offenbart. Das Dokument zeigt einen Kühlmitteltank, zum Beispiel für ein Elektrofahrzeug, der mehrere in seinem Inneren angeordnete Komponenten zur Herstellung multipler Kühlmittelkreisläufe aufweist.

Hier setzt die vorliegende Erfindung an.

Der vorliegenden Erfindung liegt die Aufgabe zugrunde, ein Kühlmittelventil, ein Kühlsystem und ein Kraftfahrzeug mit einem Kühlsystem zu verbessern.

Diese Aufgabe wird durch ein Kühlmittelventil mit den Merkmalen des Anspruchs 1 gelöst, das dadurch gekennzeichnet ist, dass das Ventilgehäuse einen Gehäuseöffnungen aufweisenden ersten Gehäusezylinder mit einem um eine erste Drehachse drehbaren ersten Ventilkörper und einen Gehäuseöffnungen aufweisenden zweiten Gehäusezylinder mit einem um eine zweite Drehachse drehbaren zweiten Ventilkörper aufweist, wobei die beiden Drehachsen parallel zueinander angeordnet sind und der erste Gehäusezylinder entlang der ersten Drehachse eine erste Gehäuseebene mit dem ersten Ventilkörper und eine zweite, ventilkörperfreie Gehäuseebene aufweist, und wobei der zweite Gehäusezylinder entlang der zweiten Drehachse zumindest eine zweite Gehäuseebene mit dem zweiten Ventilkörper aufweist, und wobei die beiden Gehäusezylinder lediglich mittels der zweiten Gehäuseebenen miteinander strömungsleitend verbunden sind. Ferner wird diese Aufgabe durch ein Kühlsystem eines Kraftfahrzeugs mit den Merkmalen des Anspruchs 8 und ein Kraftfahrzeug mit den Merkmalen des Anspruchs 10 gelöst. Die Unteransprüche betreffen vorteilhafte Weiterbildungen der Erfindung.

Ein wesentlicher Vorteil der Erfindung liegt insbesondere darin, dass ein Kühlmittelventil, ein Kühlsystem und ein Kraftfahrzeug mit einem Kühlsystem verbessert sind. Aufgrund der erfindungsgemäßen Ausbildung des Kühlmittelventils, des Kühlsystems und des Kraftfahrzeugs können die Raum-, Material-, Fertigungs- und Anordnungseffizienz des Kühlsystems maximiert werden. Beispielsweise ist es mittels des erfindungsgemäßen Kühlmittelventils möglich, die Anzahl an Bauteilen, den Montage- und Demontageaufwand, den Platzbedarf für das erfindungsgemäße Kühlsystem und schließlich auch die Kosten und das Gesamtgewicht des erfindungsgemäßen Kühlsystems konstruktiv erheblich zu reduzieren. Ferner ist es mittels des erfindungsgemäßen Kühlmittelventils möglich, sehr komplexe Kühlsysteme, also Kühlsysteme mit einer Vielzahl von Kühlmittelleitungen und Verschaltungsmöglichkeiten dieser Kühlmittelleitungen, auf konstruktiv und fertigungstechnisch einfache Art und Weise zu realisieren. Die oben genannten Ziele, also die Realisierung eines komplexen Kühlsystems auf der einen Seite und die Reduzierung dieses Kühlsystems in baulicher Hinsicht auf der anderen Seite, sind mittels der vorliegenden Erfindung im Unterschied zum Stand der Technik gleichzeitig erreichbar.

Grundsätzlich ist das Kühlmittelventil nach Art, Funktionsweise, Material und Dimensionierung in weiten geeigneten Grenzen frei wählbar. Siehe hierzu beispielsweise die diesbezüglichen Ausführungen in der Beschreibungseinleitung, besonders im Hinblick auf die Elektromobilität. Entsprechend ist auch die Ventildichtung in weiten geeigneten Grenzen frei wählbar, so dass diese zum Beispiel als separate Dichtung oder als ein integraler Bestandteil des jeweiligen Ventilkörpers und/oder des Ventilgehäuses ausgebildet sein kann.

Eine vorteilhafte Weiterbildung des erfindungsgemäßen Kühlmittelventils sieht vor, dass der erste Gehäusezylinder und/oder der zweite Gehäusezylinder, sofern der zweite Gehäusezylinder eine erste und eine zweite Gehäuseebene aufweist, jeweils eine strömungsleitende Verbindung zwischen der ersten Gehäuseebene und der zweiten Gehäuseebene aufweisen/aufweist. Auf diese Weise ist die Anzahl der möglichen Verschaltungen von voneinander verschiedenen Kühlmittelleitungen mittels des Kühlmittelventils zusätzlich erhöht.

Grundsätzlich sind der erste Ventilkörper und der zweite Ventilkörper nach Art, Funktion, Material, Dimensionierung und Form in weiten geeigneten Grenzen frei wählbar. Zweckmäßigerweise ist es vorgesehen, dass der erste Ventilkörper und/oder der zweite Ventilkörper zylinderförmig oder kugelförmig ausgebildet sind/ist. Die Kombination von Gehäusezylindern auf der eine Seite und zylinderförmigen oder kugelförmigen Ventilkörpern auf der anderen Seite ist in konstruktiver und fertigungstechnischer Hinsicht besonders vorteilhaft.

Eine weitere vorteilhafte Weiterbildung des erfindungsgemäßen Kühlmittelventils sieht vor, dass der erste Ventilkörper, in einem Schnitt senkrecht zur ersten Drehachse, zumindest teilweise als ein einseitig offenes Profil ausgebildet ist, bevorzugt, dass dieses Profil des ersten Ventilkörpers U-förmig ausgebildet ist. Hierdurch ist der erste Ventilkörper besonders geeignet für die Verwendung in dem erfindungsgemäßen Kühlmittelventil ausgeformt. Dies deshalb, weil hierdurch beispielsweise die Anzahl der möglichen Verschaltungen von Kühlmittelleitungen mittels des erfindungsgemäßen Kühlmittelventils auf konstruktiv und fertigungstechnisch einfache Art und Weise zusätzlich erhöht ist, wobei auch eine strömungsleitende Verbindung zwischen der ersten und der zweiten Gehäuseebene des ersten Gehäusezylinders leicht umsetzbar ist. Dies gilt besonders für die bevorzugte Ausführungsform dieser Weiterbildung. Die Formulierung "U-förmig" ist dabei weit auszulegen.

Eine andere vorteilhafte Weiterbildung des erfindungsgemäßen Kühlmittelventils sieht vor, dass der zweite Ventilkörper, in einem Schnitt senkrecht zur zweiten Drehachse, als ein Kreisringsegment ausgebildet ist, bevorzugt, dass sich das Kreisringsegment zwischen größer gleich 100° und kleiner gleich 180° um die zweite Drehachse erstreckt. Auf diese Weise ist der zweite Ventilkörper konstruktiv und fertigungstechnisch besonders einfach ausführbar. Die bevorzugte Ausführungsform dieser Weiterbildung hat darüber hinaus den weiteren Vorteil, dass mittels des zweiten Ventilkörpers, trotz der vorgenannten Einfachheit, eine Vielzahl von Verschaltungen von Kühlmittelleitungen ermöglicht ist.

Eine besonders vorteilhafte Weiterbildung des erfindungsgemäßen Kühlmittelventils sieht vor, dass der erste Ventilkörper und der erste Gehäusezylinder und/oder der zweite Ventilkörper und der zweite Gehäusezylinder jeweils derart aufeinander abgestimmt ausgebildet sind, dass bei einer Drehung des jeweiligen Ventilkörpers zwecks Überführung des Kühlmittelventils von einem ersten Ventilzustand in einen zweiten Ventilzustand bei der vorgenannten Drehung eine Herstellung eines dritten Ventilzustands des Kühlmittelventils mit einer ungewünschten strömungsleitenden Verbindung mehrerer Gehäuseöffnungen verhindert ist. Hierdurch sind während der Überführung des erfindungsgemäßen Kühlmittelventils von einem ersten Ventilzustand mit einer gewünschten Verschaltung von Kühlmittelleitungen zu einem zweiten Ventilzustand mit einer gewünschten Verschaltung von Kühlmittelleitungen ungewünschte Verschaltungen von Kühlmittelleitungen wirksam verhindert, so dass ungewünschte Kühlmittelströme unterbunden sind. Entsprechend ist die Effizienz des erfindungsgemäßen Kühlmittelventils wesentlich verbessert.

Eine weitere besonders vorteilhafte Weiterbildung des erfindungsgemäßen Kühlmittelventils sieht vor, dass der erste Ventilkörper und der erste Gehäusezylinder und/oder der zweite Ventilkörper und der zweite Gehäusezylinder jeweils derart aufeinander abgestimmt ausgebildet sind, dass ein Öffnungsgrad mindestens einer der Gehäuseöffnungen in Abhängigkeit der Drehung des jeweiligen Ventilkörpers regelbar ist. Auf diese Weise ist bei dieser Gehäuseöffnung nicht nur eine Einstellung zwischen keinem Kühlmittelstrom oder einem vollständigen Kühlmittelstrom möglich, sondern es sind zusätzlich dazu bei dieser Gehäuseöffnung noch teilweise Kühlmittelströme mittels des jeweiligen Ventilkörpers einstellbar. Entsprechend ist ein Kühlmittelstrom auf voneinander verschiedene Kühlmittelleitungen wunschgemäß aufteilbar. Davon umfasst ist auch, dass ein Teilstrom des Kühlmittels im Kreis geführt wird.

Grundsätzlich ist das erfindungsgemäße Kühlsystem nach Art, Funktionsweise, Material, Dimensionierung und Anordnung in weiten geeigneten Grenzen frei wählbar. Siehe hierzu beispielsweise die diesbezüglichen Ausführungen, insbesondere im Hinblick auf als Elektrofahrzeuge ausgebildete Kraftfahrzeuge.

Eine besonders vorteilhafte Weiterbildung des erfindungsgemäßen Kühlsystems sieht vor, dass das mindestens eine Kühlmittelventil als lediglich ein einziges Kühlmittelventil ausgebildet ist. Hierdurch ist das erfindungsgemäße Kühlsystem konstruktiv und fertigungstechnisch sowie mit Blick auf Bauraum, Kosten und Gewicht optimiert, da mittels eines einzigen erfindungsgemäßen Kühlmittelventils sämtliche Steuerungsaufgaben in dem erfindungsgemäßen Kühlsystem durchführbar sind.

Anhand der beigefügten, grob schematischen Zeichnung wird die Erfindung nachfolgend näher erläutert. Dabei zeigt:
- Fig. 1a-1c: ein erstes Ausführungsbeispiel des erfindungsgemäßen Kühlmittelventils für das erfindungsgemäße Kühlsystem des erfindungsgemäßen Kraftfahrzeugs in drei Querschnitten durch die erste Gehäuseebene (jeweilige Bildebene oben) und die zweite Gehäuseebene (jeweilige Bildebene unten), jeweils in einer Draufsicht,
- Fig. 2a-2d: das Ausführungsbeispiel gemäß der Fig. 1a bis 1c in vier weiteren Querschnitten, in analoger Darstellung,
- Fig. 3a-3b: das Ausführungsbeispiel gemäß der Fig. 1a bis 2d in einem ersten Ventilzustand, mit dem Kühlsystem (Fig. 3a) und in analoger Darstellung zu den Fig. 1a bis 2d (Fig. 3b),
- Fig. 4a-4b: das Ausführungsbeispiel gemäß der Fig. 1a bis 2d in einem zweiten Ventilzustand, mit dem Kühlsystem (Fig. 4a) und in analoger Darstellung zu den Fig. 1a bis 2d (Fig. 4b),
- Fig. 5a-5b: das Ausführungsbeispiel gemäß der Fig. 1a bis 2d in einem dritten Ventilzustand, mit dem Kühlsystem (Fig. 5a) und in analoger Darstellung zu den Fig. 1a bis 2d (Fig. 5b) und
- Fig. 6a-6d: ein zweites Ausführungsbeispiel des erfindungsgemäßen Kühlmittelventils für das erfindungsgemäße Kühlsystem des erfindungsgemäßen Kraftfahrzeugs in vier Querschnitten durch die erste Gehäuseebene (Bildebene oben) und die zweite Gehäuseebene (Bildebene unten), jeweils in einer Draufsicht.

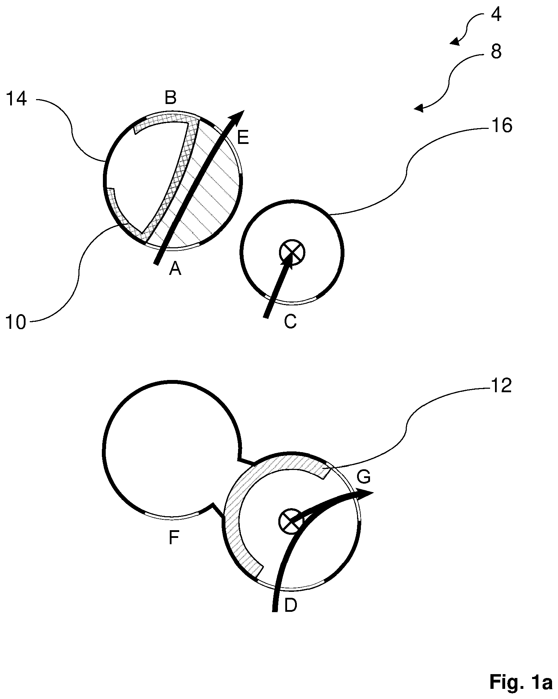

In den Fig. 1a bis 5b ist ein erstes Ausführungsbeispiel des erfindungsgemäßen Kühlmittelventils für das erfindungsgemäße Kühlsystem des erfindungsgemäßen Kraftfahrzeugs rein exemplarisch dargestellt.

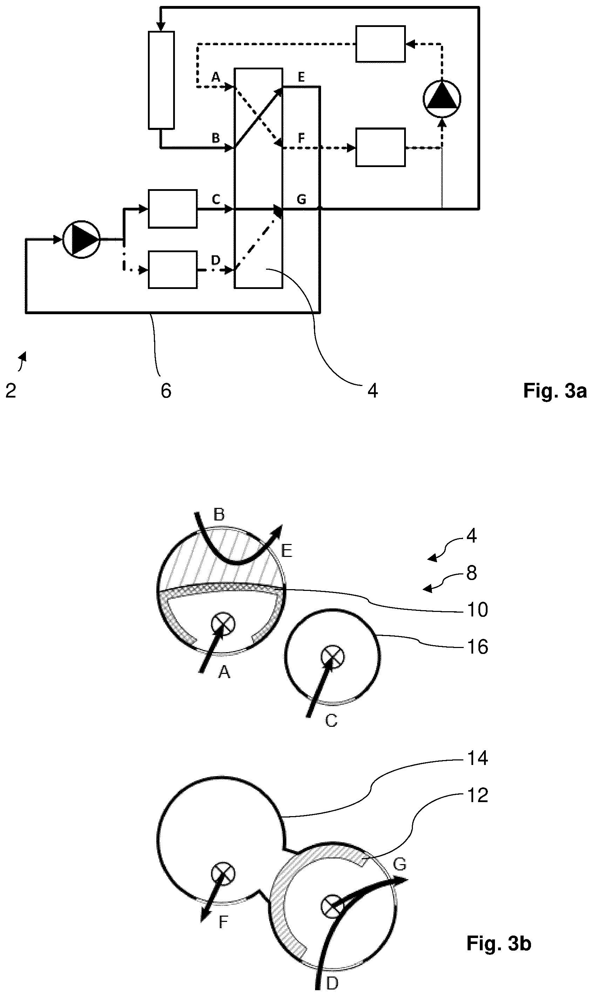

Das nicht näher dargestellte Kraftfahrzeug ist als ein Elektrofahrzeug ausgebildet und weist das lediglich in den Fig. 3a, 4a und 5a dargestellte Kühlsystem 2 auf.

Das Kühlsystem 2 umfasst lediglich ein einziges Kühlmittelventil 4 und eine Mehrzahl von mit dem Kühlmittelventil 4 strömungsleitend verbundenen Kühlmittelleitungen 6, wobei mindestens zwei der Kühlmittelleitungen 6 mittels des Kühlmittelventils 4 miteinander automatisch strömungsleitend verbindbar sind. Die weiteren Einzelheiten des Kühlsystems 2 werden hier nicht näher erläutert und entsprechen im Wesentlichen den üblichen Ausführungsformen von Kühlsystemen von Elektrofahrzeugen. Siehe hierzu auch die diesbezüglichen Erläuterungen in der Beschreibungseinleitung.

Das Kühlmittelventil 4 umfasst ein Ventilgehäuse 8 mit einer Mehrzahl von Gehäuseöffnungen A bis G, jeweils zum strömungsleitenden Anschluss einer der Kühlmittelleitungen 6 des Kühlsystems 2, einen ersten und einen zweiten in dem Ventilgehäuse 8 drehbar angeordneten Ventilkörper 10, 12 zur automatischen strömungsleitenden Verbindung von mindestens zwei der Gehäuseöffnungen A bis G in Abhängigkeit einer Drehlage der beiden Ventilkörper 10, 12 und mindestens eine zwischen dem Ventilgehäuse 8 und den Ventilkörpern 10, 12 angeordnete, nicht dargestellte Ventildichtung zur Abdichtung des Kühlmittelventils 4.

Das Ventilgehäuse 8 weist einen die Gehäuseöffnungen A, B, E, F aufweisenden ersten Gehäusezylinder 14 mit dem um eine erste, nicht dargestellte Drehachse drehbaren ersten Ventilkörper 10 und einen die Gehäuseöffnungen C, D, G aufweisenden zweiten Gehäusezylinder 16 mit dem um eine zweite, nicht dargestellte Drehachse drehbaren zweiten Ventilkörper 12 auf, wobei die beiden Drehachsen parallel zueinander angeordnet sind und der erste Gehäusezylinder 14 entlang der ersten Drehachse eine in der jeweiligen Bildebene der Fig. 1a bis 1c, 2a bis 2d, 3b, 4b und 5b oben dargestellte erste Gehäuseebene mit dem ersten Ventilkörper 10 und eine in der jeweiligen Bildebene der Fig. 1a bis 1c, 2a bis 2d, 3b, 4b und 5b unten dargestellte zweite, ventilkörperfreie Gehäuseebene aufweist, und wobei der zweite Gehäusezylinder 16 bei dem vorliegenden ersten Ausführungsbeispiel entlang der zweiten Drehachse ebenfalls eine in der jeweiligen Bildebene der Fig. 1a bis 1c, 2a bis 2d, 3b, 4b und 5b oben dargestellte erste Gehäuseebene und eine in der jeweiligen Bildebene der Fig. 1a bis 1c, 2a bis 2d, 3b, 4b und 5b unten dargestellte zweite Gehäuseebene mit dem zweiten Ventilkörper 12 aufweist, und wobei die beiden Gehäusezylinder 14, 16 lediglich mittels der zweiten Gehäuseebenen miteinander strömungsleitend verbunden sind.

Ferner weisen der erste Gehäusezylinder 14 und der zweite Gehäusezylinder 16 hier jeweils eine strömungsleitende Verbindung zwischen der ersten Gehäuseebene und der zweiten Gehäuseebene auf. Diese strömungsleitenden Verbindungen sind in den Fig. 1a bis 1c, 2a bis 2d, 3b, 4b und 5b, sofern in dem jeweils abgebildeten Ventilzustand des Kühlmittelventils 4 sichtbar, jeweils durch einen Kreis mit einem Kreuz symbolisiert.

Der erste Ventilkörper 10 und der zweite Ventilkörper 12 sind bei dem vorliegenden Ausführungsbeispiel zylinderförmig ausgebildet, wobei sich die jeweilige Zylinderform auf die den jeweiligen Ventilkörper 10, 12 einhüllende Form bezieht. Darüber hinaus ist der erste Ventilkörper 10, in einem in den Fig. 1a bis 1c, 2a bis 2d, 3b, 4b und 5b gezeigten Schnitt senkrecht zur ersten Drehachse, zumindest teilweise als ein einseitig offenes Profil ausgebildet, wobei dieses Profil des ersten Ventilkörpers 10 hier U-förmig ausgebildet ist. Im Unterschied dazu ist der zweite Ventilkörper 12, in einem in den Fig. 1a bis 1c, 2a bis 2d, 3b, 4b und 5b gezeigten Schnitt senkrecht zur zweiten Drehachse, als ein Kreisringsegment ausgebildet, wobei das Kreisringsegment sich bei dem vorliegenden ersten Ausführungsbeispiel im Wesentlichen um 180° um die zweite Drehachse erstreckt.

Ferner sind der erste Ventilkörper 10 und der erste Gehäusezylinder 14 sowie der zweite Ventilkörper 12 und der zweite Gehäusezylinder 16 jeweils derart aufeinander abgestimmt ausgebildet, dass bei einer Drehung des jeweiligen Ventilkörpers 10, 12 zwecks Überführung des Kühlmittelventils 4 von einem ersten Ventilzustand in einen zweiten Ventilzustand bei der vorgenannten Drehung eine Herstellung eines dritten Ventilzustands des Kühlmittelventils 4 mit einer ungewünschten strömungsleitenden Verbindung mehrerer der Gehäuseöffnungen A bis G verhindert ist. Dies wird nachfolgend noch näher erläutert.

Auch sind der erste Ventilkörper 10 und der erste Gehäusezylinder 14 sowie der zweite Ventilkörper 12 und der zweite Gehäusezylinder 16 jeweils derart aufeinander abgestimmt ausgebildet, dass ein Öffnungsgrad mindestens einer der Gehäuseöffnungen A bis G in Abhängigkeit der Drehung des jeweiligen Ventilkörpers 10, 12 regelbar ist. Dies wird ebenfalls nachfolgend näher erläutert.

Im Nachfolgenden wird das erfindungsgemäße Kühlsystem des erfindungsgemäßen Kraftfahrzeugs mit dem erfindungsgemäßen Kühlmittelventil gemäß dem vorliegenden ersten Ausführungsbeispiel anhand der Fig. 1a bis 5b näher erläutert.

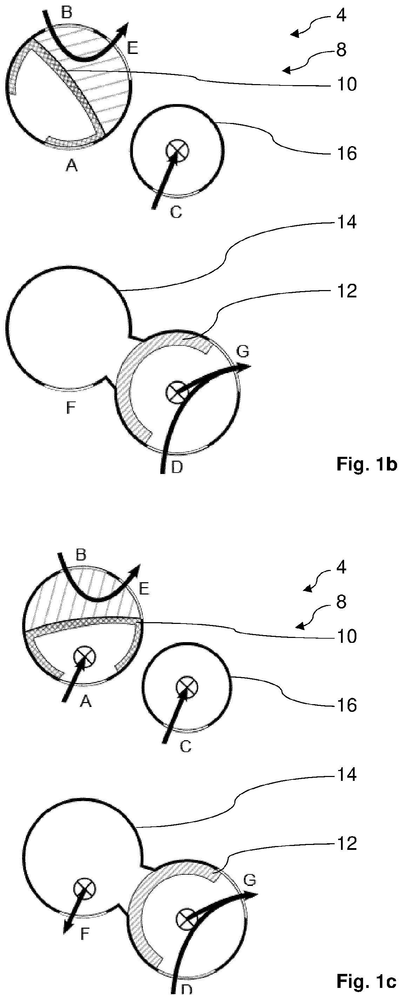

In den Fig. 1a bis 1c ist das Kühlmittelventil 4 in drei voneinander verschiedenen Ventilzuständen gezeigt, wobei der Einfachheit halber lediglich der in der jeweiligen Bildebene oben dargestellte und in der ersten Gehäuseebene des ersten Gehäusezylinders 14 angeordnete erste Ventilkörper 10 um die erste Drehachse senkrecht zur Bildebene gedreht wird. Der in der jeweiligen Bildebene unten dargestellte und in der zweiten Gehäuseebene des zweiten Gehäusezylinders 16 angeordnete zweite Ventilkörper 12 ist in den Fig. 1a bis 1c lediglich in einer einzigen Beispiellage dargestellt. Die durchgezogenen Pfeile symbolisieren jeweils die Kühlmittelströme. Beispielsweise ist aus der Fig. 1a ersichtlich, dass in dem dargestellten Ventilzustand des Kühlmittelventils 4 mittels des ersten Ventilkörpers 10 die Gehäuseöffnungen A und E miteinander strömungsleitend verbunden sind, während die Gehäuseöffnungen C, D und G mittels des zweiten Ventilkörpers 12 strömungsleitend verbunden sind. Wie aus der Fig. 1a ferner hervorgeht, kann das Kühlmittel durch die Gehäuseöffnung C in das Kühlmittelventil 4 einströmen, dann über die strömungsleitende Verbindung zwischen der ersten und der zweiten Gehäuseebene des zweiten Gehäusezylinders 16 von der ersten Gehäuseebene in die zweite Gehäuseebene strömen, um schließlich gemeinsam mit durch die Gehäuseöffnung D in das Kühlmittelventil 4 einströmenden Kühlmittel durch die Gehäuseöffnung G aus dem Kühlmittelventil 4 auszuströmen. Analoges gilt für die übrigen in den Fig. 1b und 1c dargestellten Ventilzustände des Kühlmittelventils 4.

Infolgedessen sind mittels des ersten Ventilkörpers 10 beispielsweise drei verschiedene Ventilzustände des Kühlmittelventils 4 einstellbar, nämlich erstens die strömungsleitende Verbindung zwischen der Gehäuseöffnung A und der Gehäuseöffnung E, wobei die Gehäuseöffnung B mittels des ersten Ventilkörpers 10 verschlossen ist, zweitens die strömungsleitende Verbindung zwischen der Gehäuseöffnung B und der Gehäuseöffnung E, wobei die Gehäuseöffnung A mittels des ersten Ventilkörpers 10 verschlossen ist und drittens die strömungsleitende Verbindung zwischen der Gehäuseöffnung B und der Gehäuseöffnung E sowie zwischen der Gehäuseöffnung A und der Gehäuseöffnung F.

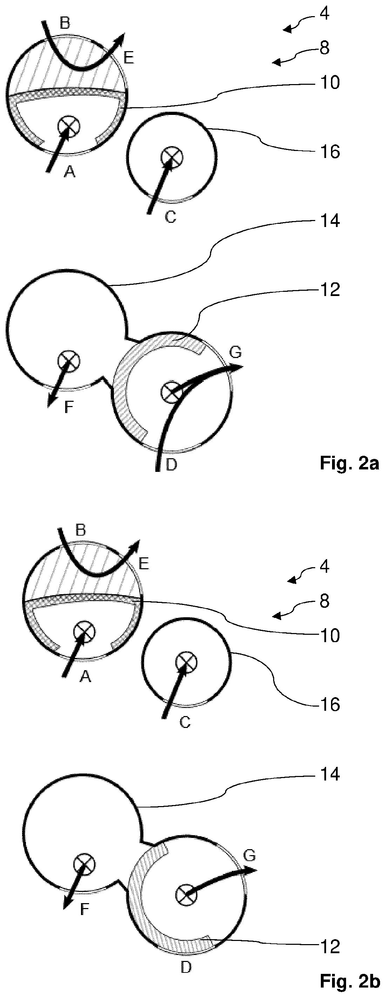

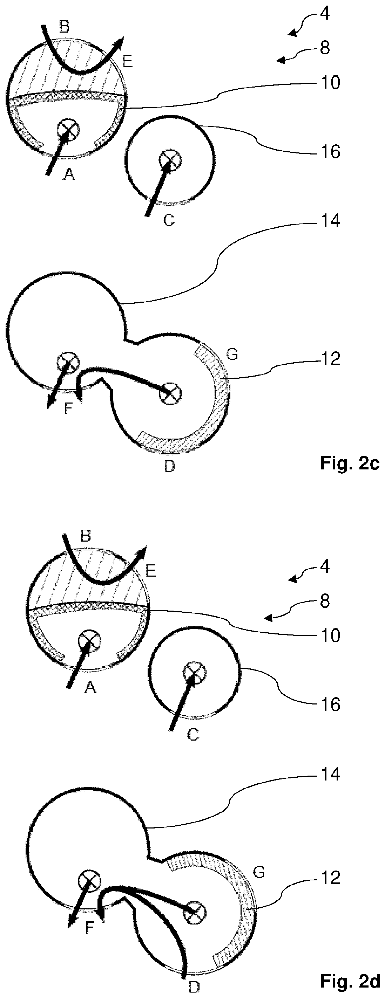

In den Fig. 2a bis 2d ist das Kühlmittelventil 4 in vier weiteren voneinander verschiedenen Ventilzuständen gezeigt. Im Unterschied zu den in den Fig. 1a bis 1c gezeigten Ventilzuständen des Kühlmittelventils 4 ist hier der Einfachheit halber lediglich der in der jeweiligen Bildebene oben dargestellte und in der ersten Gehäuseebene des ersten Gehäusezylinders 14 angeordnete erste Ventilkörper 10 in einer einzigen Beispiellage dargestellt. Der in der jeweiligen Bildebene unten dargestellte und in der zweiten Gehäuseebene des zweiten Gehäusezylinders 16 angeordnete zweite Ventilkörper 12 wird in den Fig. 2a bis 2d um die zweite Drehachse senkrecht zur Bildebene gedreht. Die durchgezogenen Pfeile symbolisieren wieder jeweils die Kühlmittelströme. Beispielsweise ist aus der Fig. 2a ersichtlich, dass in dem dargestellten Ventilzustand des Kühlmittelventils 4 mittels des ersten Ventilkörpers 10 die Gehäuseöffnungen B und E sowie A und F miteinander strömungsleitend verbunden sind, während die Gehäuseöffnungen C, D und G mittels des zweiten Ventilkörpers 12 strömungsleitend verbunden sind. Wie aus der Fig. 2a ferner hervorgeht, kann das Kühlmittel durch die Gehäuseöffnung A in das Kühlmittelventil 4 einströmen, dann über die strömungsleitende Verbindung zwischen der ersten und der zweiten Gehäuseebene des ersten Gehäusezylinders 14 von der ersten Gehäuseebene in die zweite Gehäuseebene strömen, um schließlich durch die Gehäuseöffnung F aus dem Kühlmittelventil 4 auszuströmen. Für die strömungsleitende Verbindung zwischen den Gehäuseöffnungen C, D und G kann hier auf die diesbezüglichen Ausführungen in dem vorhergehenden Absatz verwiesen werden. Wie bei den Fig. 1a bis 1c sind auch hier die übrigen in den Fig. 2b bis 2d dargestellten Ventilzustände des Kühlmittelventils 4 analog zu lesen.

Infolgedessen sind mittels des zweiten Ventilkörpers 12 beispielsweise vier verschiedene Ventilzustände des Kühlmittelventils 4 einstellbar, nämlich erstens die strömungsleitende Verbindung zwischen der Gehäuseöffnung C und der Gehäuseöffnung G sowie zwischen der Gehäuseöffnung D und der Gehäuseöffnung G, wobei die strömungsleitende Verbindung von dem zweiten Gehäusezylinder 16 zu der Gehäuseöffnung F verschlossen ist, zweitens die strömungsleitende Verbindung zwischen der Gehäuseöffnung C und der Gehäuseöffnung G, wobei die Gehäuseöffnung D und die strömungsleitende Verbindung von dem zweiten Gehäusezylinder 16 zu der Gehäuseöffnung F mittels des zweiten Ventilkörpers 12 verschlossen sind, drittens die strömungsleitende Verbindung zwischen der Gehäuseöffnung C und der Gehäuseöffnung F, wobei die Gehäuseöffnungen D und G mittels des zweiten Ventilkörpers 12 verschlossen sind und viertens die strömungsleitende Verbindung zwischen der Gehäuseöffnung C und der Gehäuseöffnung F sowie zwischen der Gehäuseöffnung D und der Gehäuseöffnung F, wobei die Gehäuseöffnung G mittels des zweiten Ventilkörpers 12 verschlossen ist.

In den Fig. 3a bis 5b sind rein exemplarisch drei Ventilzustände des Kühlmittelventils 4 dargestellt, wobei die Fig. 3a, 4a und 5a jeweils das Kühlsystem 2 mit dem Kühlmittelventil 4 und die Fig. 3b, 4b und 5b jeweils das Kühlmittelventil 4 in dem korrespondierenden Ventilzustand analog zu den Fig. 1a bis 1c und den Fig. 2a bis 2d zeigen.

Mittels des in den Fig. 3a und 3b dargestellten ersten Ventilzustands des Kühlmittelventils 4 sind zwei voneinander getrennte Kühlmittelkreisläufe realisierbar, dargestellt durch Pfeile mit durchgezogenen und gestrichelten Linien. In diesem Ventilzustand sind die Gehäuseöffnungen B und E sowie A und F mittels des ersten Ventilkörpers 10 und die Gehäuseöffnungen C, D und G mittels des zweiten Ventilkörpers 12 jeweils miteinander strömungsleitend verbunden. Die strömungsleitende Verbindung zwischen den vorgenannten Gehäuseöffnungen D und G ist in der Fig. 3a mittels Pfeilen mit strichpunktierten Linien dargestellt, wobei der Kühlmittelstrom dieser strömungsleitenden Verbindung mittels des zweiten Ventilkörpers 12 und der Gehäuseöffnung D stufenlos regelbar ist. Siehe hierzu auch die oben bereits erläuterte Fig. 2a.

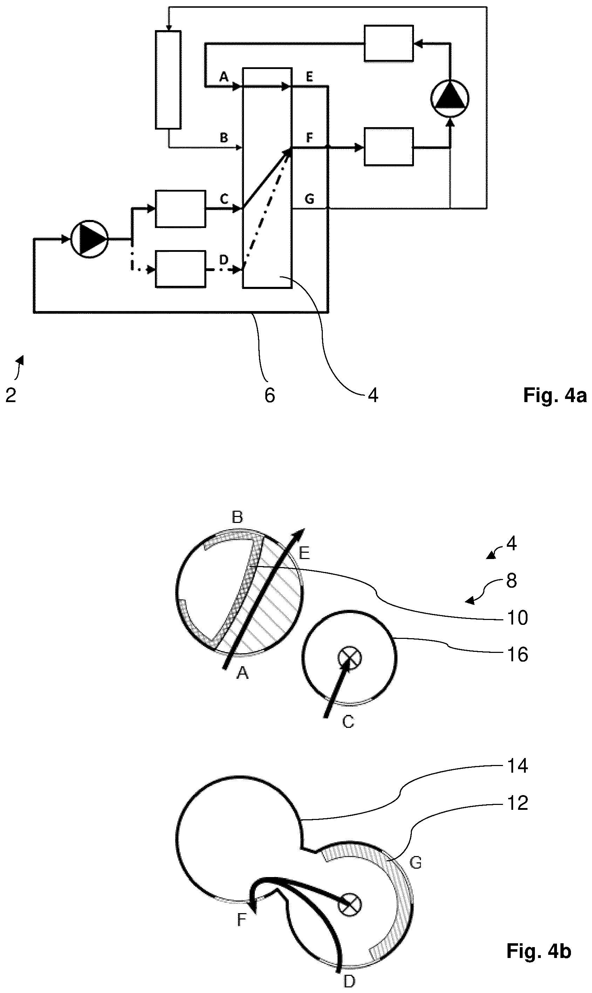

Die Fig. 4a und 4b zeigen einen zweiten Ventilzustand des Kühlmittelventils 4, bei dem ein erster gemeinsamer Kühlmittelkreislauf realisierbar ist. Dieser ist in der Fig. 4a mittels durchgezogener Linien dargestellt und umfasst die strömungsleitenden Verbindungen zwischen den Gehäuseöffnungen A und E sowie C und F. Ferner erlaubt die strömungsleitende Verbindung der Gehäuseöffnungen D und F eine geregelte Durchströmung eines zu dem vorgenannten gemeinsamen Kühlmittelkreislauf parallel angeordneten Kühlmittelkreislaufs. Dieser parallel angeordnete Kühlmittelkreislauf ist in der Fig. 4a mit strichpunktierten Linien symbolisiert.

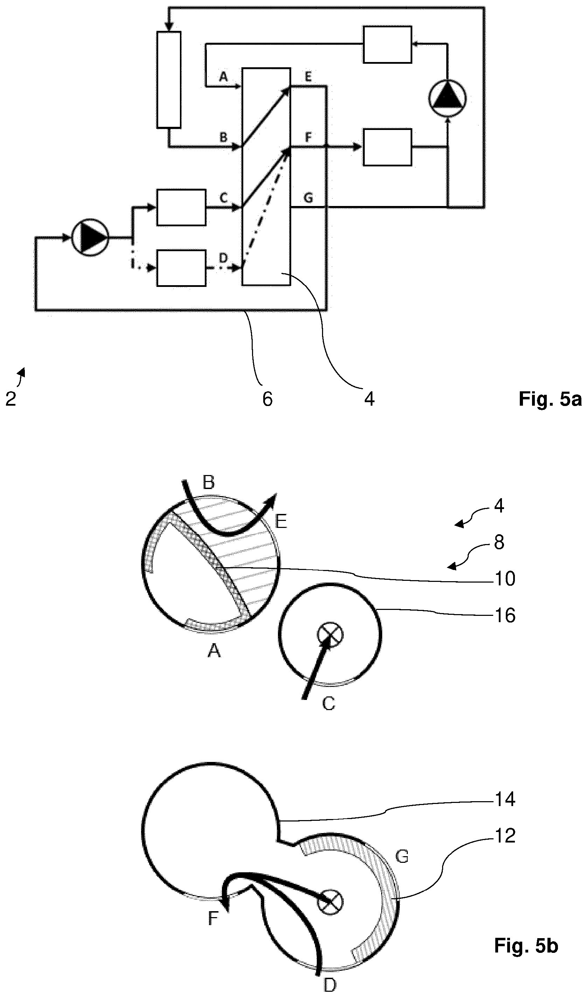

Ferner zeigen die Fig. 5a und 5b einen dritten Ventilzustand des Kühlmittelventils 4, bei dem ein zweiter gemeinsamer Kühlmittelkreislauf realisierbar ist. Dieser ist in der Fig. 4a ebenfalls mittels durgezogener Linien dargestellt und umfasst die strömungsleitenden Verbindungen zwischen den Gehäuseöffnungen B und E sowie C und F. Darüber hinaus erlaubt die strömungsleitende Verbindung der Gehäuseöffnungen D und F wieder eine geregelte Durchströmung eines zu dem vorgenannten gemeinsamen Kühlmittelkreislauf parallel angeordneten Kühlmittelkreislaufs. Dieser parallel angeordnete Kühlmittelkreislauf ist in der Fig. 5a mit strichpunktierten Linien symbolisiert.

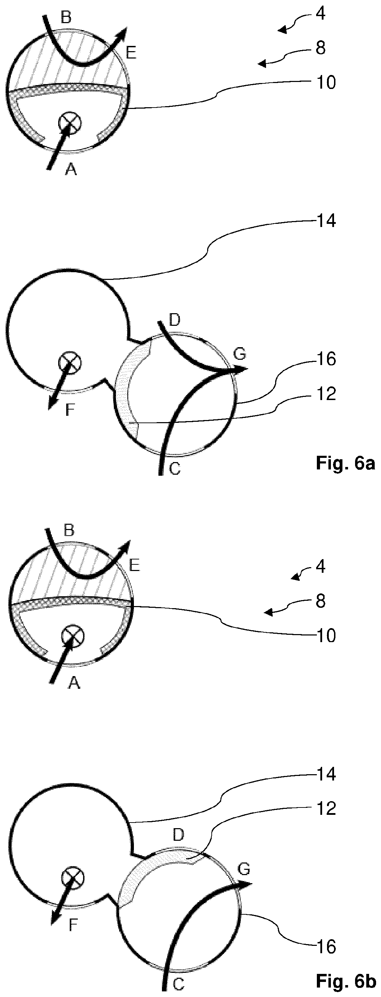

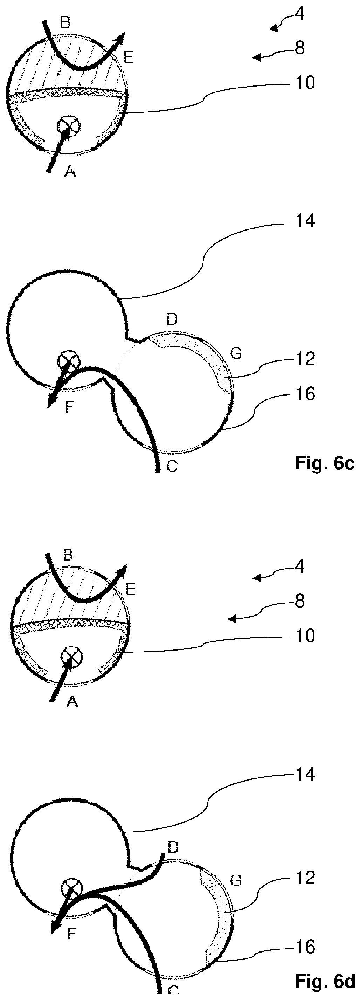

In den Fig. 6a bis 6d ist ein zweites Ausführungsbeispiel des erfindungsgemäßen Kühlmittelventils dargestellt. Gleiche oder gleichwirkende Bauteile sind mit den gleichen Bezugszeichen wie bei dem ersten Ausführungsbeispiel gemäß der Fig. 1a bis 5b versehen. Ferner wird das zweite Ausführungsbeispiel lediglich im Umfang der Unterschiede zu dem ersten Ausführungsbeispiel erläutert. Ansonsten wird auf die obigen Ausführungen zu dem ersten Ausführungsbeispiel verwiesen.

Bei dem zweiten Ausführungsbeispiel gemäß der Fig. 6a bis 6d weist der zweite Gehäusezylinder 16 lediglich die zweite Gehäuseebene auf, die parallel zu der zweiten Gehäuseebene des ersten Gehäusezylinders 14 angeordnet ist. Analog zu dem ersten Ausführungsbeispiel sind auch hier die beiden zweiten Gehäuseebenen mittels eines Verbindungskanals strömungsleitend verbunden. Entsprechend befinden sich die Gehäuseöffnungen C, D und G hier alle in der zweiten Gehäuseebene, der einzigen Gehäuseebene des zweiten Gehäusezylinders 16. Ferner ist der zweite Ventilkörper 12 hier, in einem Schnitt senkrecht zur zweiten Drehachse, ebenfalls als ein Kreisringsegment ausgebildet, wobei sich das Kreisringsegment bei dem vorliegenden zweiten Ausführungsbeispiel etwa um 108° um die zweite Drehachse erstreckt. Analog zu dem ersten Ausführungsbeispiel gemäß der Fig. 2a bis 2d ist in den Fig. 6a bis 6d des vorliegenden zweiten Ausführungsbeispiels der erste Ventilkörper 10 lediglich in einer einzigen Beispiellage dargestellt. Diese Beispiellage entspricht der gemäß der Fig. 2a bis 2d gewählten Beispiellage des ersten Ventilkörpers 10 bei dem ersten Ausführungsbeispiel.

Gemäß dem vorliegenden zweiten Ausführungsbeispiel sind somit mittels des zweiten Ventilkörpers 12 beispielsweise vier verschiedene Ventilzustände des Kühlmittelventils 4 einstellbar, nämlich erstens die strömungsleitende Verbindung zwischen der Gehäuseöffnung C und der Gehäuseöffnung G sowie zwischen der Gehäuseöffnung D und der Gehäuseöffnung G, wobei die strömungsleitende Verbindung des zweiten Gehäusezylinders 16 zu der Gehäuseöffnung F mittels des zweiten Ventilkörpers 12 verschlossen ist, zweitens die strömungsleitende Verbindung zwischen der Gehäuseöffnung C und der Gehäuseöffnung G, wobei die Gehäuseöffnung D sowie die vorgenannte strömungsleitende Verbindung zu der Gehäuseöffnung F mittels des zweiten Ventilkörpers 12 verschlossen sind, drittens die strömungsleitende Verbindung zwischen der Gehäuseöffnung C und der Gehäuseöffnung F, wobei die Gehäuseöffnungen D und G mittels des zweiten Ventilkörpers 12 verschlossen sind und viertens die strömungsleitende Verbindung zwischen der Gehäuseöffnung C und der Gehäuseöffnung F sowie zwischen der Gehäuseöffnung D und der Gehäuseöffnung F, wobei die Gehäuseöffnung G mittels des zweiten Ventilkörpers 12 verschlossen ist.

Die Erfindung ist nicht auf die vorliegenden Ausführungsbeispiele begrenzt.

Die beschriebenen Ausführungsbeispiele dienen lediglich dem besseren Verständnis der Struktur, der Funktionsweise und der Eigenschaften der hier offenbarten

Erfindung. Die Fig. 1a bis 6d sind schematisch, um die Funktionen, Wirkprinzipien, technischen Ausgestaltungen und Merkmale zu verdeutlichen. Dabei können jede Funktionsweise, jedes Prinzip, jede technische Ausgestaltung und jedes Merkmal, welches/welche in den Fig. 1a bis 6d oder im Text offenbart ist/sind, mit allen Ansprüchen, jedem Merkmal im Text und in den anderen Figuren, anderen Funktionsweisen, Prinzipien, technischen Ausgestaltungen und Merkmalen, die in dieser Offenbarung enthalten sind oder sich daraus ergeben, frei und beliebig kombiniert werden, so dass alle denkbaren Kombinationen der beschriebenen Erfindung zuzuordnen sind. Dabei sind auch Kombinationen zwischen allen einzelnen Ausführungen im Text, das heißt in jedem Abschnitt der Beschreibung, in den Ansprüchen und auch Kombinationen zwischen verschiedenen Varianten im Text, in den Ansprüchen und in den Fig. 1a bis 6d umfasst. Auch die Ansprüche limitieren nicht die Offenbarung und damit die Kombinationsmöglichkeiten aller aufgezeigten Merkmale untereinander. Alle offenbarten Merkmale sind explizit auch einzeln und in Kombination mit allen anderen Merkmalen hier offenbart.

### Bezugszeichenliste

- 2: Kühlsystem
- 4: Kühlmittelventil
- 6: Kühlmittelleitungen
- 8: Ventilgehäuse
- 10: Erster Ventilkörper
- 12: Zweiter Ventilkörper
- 14: Erster Gehäusezylinder des Ventilgehäuses 8
- 16: Zweiter Gehäusezylinder des Ventilgehäuses 8
- A bis G: Gehäuseöffnungen des Ventilgehäuses 8

## Patentansprüche

1. Kühlmittelventil (4) für ein Kühlsystem (2) eines Kraftfahrzeugs, umfassend ein Ventilgehäuse (8) mit einer Mehrzahl von Gehäuseöffnungen (A bis G), jeweils zum strömungsleitenden Anschluss einer Kühlmittelleitung (6) des Kühlsystems (2), mindestens einen in dem Ventilgehäuse (8) drehbar angeordneten Ventilkörper (10, 12) zur automatischen strömungsleitenden Verbindung von mindestens zwei der Gehäuseöffnungen (A bis G) in Abhängigkeit einer Drehlage des mindestens einen Ventilkörpers (10, 12) und mindestens eine zwischen dem Ventilgehäuse (8) und dem mindestens einen Ventilkörper (10, 12) angeordnete Ventildichtung zur Abdichtung des Kühlmittelventils (4),
wobei das Ventilgehäuse (8) einen Gehäuseöffnungen (A, B, E, F) aufweisenden ersten Gehäusezylinder (14) mit einem um eine erste Drehachse drehbaren ersten Ventilkörper (10) und einen Gehäuseöffnungen (C, D, G) aufweisenden zweiten Gehäusezylinder (16) mit einem um eine zweite Drehachse drehbaren zweiten Ventilkörper (12) aufweist, wobei die beiden Drehachsen parallel zueinander angeordnet sind **dadurch gekennzeichnet, dass** der erste Gehäusezylinder (14) entlang der ersten Drehachse eine erste Gehäuseebene mit dem ersten Ventilkörper (10) und eine zweite, ventilkörperfreie Gehäuseebene aufweist, und wobei der zweite Gehäusezylinder (16) entlang der zweiten Drehachse zumindest eine zweite Gehäuseebene mit dem zweiten Ventilkörper (12) aufweist, und wobei die beiden Gehäusezylinder (14, 16) lediglich mittels der zweiten Gehäuseebenen miteinander strömungsleitend verbunden sind.

2. Kühlmittelventil (4) nach Anspruch 1,
**dadurch gekennzeichnet,**
**dass** der erste Gehäusezylinder (14) und/oder der zweite Gehäusezylinder (16), sofern der zweite Gehäusezylinder eine erste und eine zweite Gehäuseebene aufweist, jeweils eine strömungsleitende Verbindung zwischen der ersten Gehäuseebene und der zweiten Gehäuseebene aufweisen/aufweist.

3. Kühlmittelventil (4) nach Anspruch 1 oder 2,
**dadurch gekennzeichnet,**
**dass** der erste Ventilkörper (10) und/oder der zweite Ventilkörper (12) zylinderförmig oder kugelförmig ausgebildet sind/ist.

4. Kühlmittelventil (4) nach einem der Ansprüche 1 bis 3,
**dadurch gekennzeichnet,**
**dass** der erste Ventilkörper (10), in einem Schnitt senkrecht zur ersten Drehachse, zumindest teilweise als ein einseitig offenes Profil ausgebildet ist, bevorzugt, dass dieses Profil des ersten Ventilkörpers (10) U-förmig ausgebildet ist.

5. Kühlmittelventil (4) nach einem der Ansprüche 1 bis 4,
**dadurch gekennzeichnet,**
**dass** der zweite Ventilkörper (12), in einem Schnitt senkrecht zur zweiten Drehachse, als ein Kreisringsegment ausgebildet ist, bevorzugt, dass sich das Kreisringsegment zwischen größer gleich 100° und kleiner gleich 180° um die zweite Drehachse erstreckt.

6. Kühlmittelventil (4) nach einem der Ansprüche 1 bis 5,
**dadurch gekennzeichnet,**
**dass** der erste Ventilkörper (10) und der erste Gehäusezylinder (14) und/oder der zweite Ventilkörper (12) und der zweite Gehäusezylinder (16) jeweils derart aufeinander abgestimmt ausgebildet sind, dass bei einer Drehung des jeweiligen Ventilkörpers (10, 12) zwecks Überführung des Kühlmittelventils (4) von einem ersten Ventilzustand in einen zweiten Ventilzustand bei der vorgenannten Drehung eine Herstellung eines dritten Ventilzustands des Kühlmittelventils (4) mit einer ungewünschten strömungsleitenden Verbindung mehrerer Gehäuseöffnungen (A bis G) verhindert ist.

7. Kühlmittelventil (4) nach einem der Ansprüche 1 bis 6,
**dadurch gekennzeichnet,**
**dass** der erste Ventilkörper (10) und der erste Gehäusezylinder (14) und/oder der zweite Ventilkörper (12) und der zweite Gehäusezylinder (16) jeweils derart aufeinander abgestimmt ausgebildet sind, dass ein Öffnungsgrad mindestens einer der Gehäuseöffnungen (D) in Abhängigkeit der Drehung des jeweiligen Ventilkörpers (12) regelbar ist.

8. Kühlsystem (2) eines Kraftfahrzeugs, umfassend mindestens ein Kühlmittelventil (4) und eine Mehrzahl von mit Gehäuseöffnungen (A bis G) des Kühlmittelventils (4) strömungsleitend verbundener Kühlmittelleitungen (6), wobei mindestens zwei der Kühlmittelleitungen (6) mittels des Kühlmittelventils (4) miteinander automatisch strömungsleitend verbindbar sind,
**dadurch gekennzeichnet,**
**dass** mindestens eines des mindestens einen Kühlmittelventils (4) nach einem der Ansprüche 1 bis 7 ausgebildet ist.

9. Kühlsystem (2) nach Anspruch 8,
**dadurch gekennzeichnet,**
**dass** das mindestens eine Kühlmittelventil (4) als lediglich ein einziges Kühlmittelventil ausgebildet ist.

10. Kraftfahrzeug mit einem Kühlsystem (2),
**dadurch gekennzeichnet,**
**dass** das Kühlsystem (2) nach Anspruch 8 oder 9 ausgebildet ist.

## Claims

1. A coolant valve (4) for a cooling system (2) of a motor vehicle, comprising a valve housing (8) with a plurality of housing openings (A to G), each for the flow-conducting connection of a coolant line (6) of the cooling system (2), at least one valve body (10, 12) rotatably arranged in the valve housing (8) for the automatic flow-conducting connection of at least two of the housing openings (A to G) depending on the rotational position of the at least one valve body (10, 12), and at least one valve seal arranged between the valve housing (8) and the at least one valve body (10, 12) for sealing the coolant valve (4),
said valve housing (8) comprising a first housing cylinder (14) with housing openings (A, B, E, F) and a first valve body (10) rotatable about a first axis of rotation and a second housing cylinder (16) with housing openings (C, D, G) and a second valve body (12) rotatable about a second axis of rotation, said two axes of rotation being arranged parallel to one another,
**characterized in that**
the first housing cylinder (14) has along the first axis of rotation a first housing plane with the first valve body (10) and a second, valve-body-free housing plane, and **in that** the second housing cylinder (16) has along the second axis of rotation at least a second housing plane with the second valve body (12), and **in that** the two housing cylinders (14, 16) are connected to one another in a flow-conducting manner only by means of the second housing planes.

2. A coolant valve (4) according to claim 1,
**characterized in that**
the first housing cylinder (14) and/or the second housing cylinder (16), insofar the second housing cylinder has a first and a second housing plane, each have a flow-conducting connection between the first housing plane and the second housing plane.

3. A coolant valve (4) according to claim 1 or claim 2,
**characterized in that**
the first valve body (10) and/or the second valve body (12) is/are cylindrical or spherical in shape.

4. A coolant valve (4) according to one of claims 1 to 3,
**characterized in that**
the first valve body (10), in a section perpendicular to the first axis of rotation, is at least partially designed as a profile open on one side, preferably **in that** this profile of the first valve body (10) is U-shaped.

5. A coolant valve (4) according to one of claims 1 to 4,
**characterized in that**
the second valve body (12), in a section perpendicular to the second axis of rotation, is designed as an annular ring segment, preferably **in that** the annular ring segment extends between greater than or equal to 100° and less than or equal to 180° around the second axis of rotation.

6. A coolant valve (4) according to one of claims 1 to 5,
**characterized in that**
the first valve body (10) and the first housing cylinder (14) and/or the second valve body (12) and the second housing cylinder (16) are each designed to match one another in such a way that, when the respective valve body (10, 12) is rotated in order to switch the coolant valve (4) from a first valve state to a second valve state, the creation of a third valve state of the coolant valve (4) during the aforementioned rotation with an undesired flow-conducting connection of several housing openings (A to G) is prevented.

7. A coolant valve (4) according to one of claims 1 to 6,
**characterized in that**
the first valve body (10) and the first housing cylinder (14) and/or the second valve body (12) and the second housing cylinder (16) are each designed to be matched to one another in such a way that a degree of opening of at least one of the housing openings (D) can be regulated depending on the rotation of the respective valve body (12).

8. A cooling system (2) of a motor vehicle, comprising at least one coolant valve (4) and a plurality of coolant lines (6) connected in a flow-conducting manner to housing openings (A to G) of the coolant valve (4), in which at least two of the coolant lines (6) can be automatically connected to one another in a flow-conducting manner by means of the coolant valve (4),
**characterized in that**
at least one of the at least one coolant valve (4) is designed according to one of claims 1 to 7.

9. A cooling system (2) according to claim 8,
**characterized in that**
the at least one coolant valve (4) is designed as only a single coolant valve.

10. A motor vehicle with a cooling system (2),
**characterized in that**
the cooling system (2) is designed according to claims 8 or 9.

## Revendications

1. Soupape d'agent de refroidissement (4) pour un système de refroidissement (2) d'un véhicule automobile comprenant un boîtier de soupape (8) avec plusieurs ouvertures de boîtier (A à G) pour la liaison conductrice de l'écoulement d'une conduite de liquide de refroidissement (6) du système de refroidissement (2), au moins un corps de soupape (10, 12) disposé de manière rotative dans le boîtier de soupape (8) pour la liaison conductrice d'écoulement automatique d'au moins deux des ouvertures de boîtier (A à G) en fonction d'une position de rotation d'au moins un corps de soupape (10, 12) et d'au moins un joint de soupape disposé entre le boîtier de soupape (8) et au moins un corps de soupape (10, 12) pour l'étanchéité de la soupape d'agent de refroidissement (4),
le boîtier de soupape (8) comportant un premier cylindre de boîtier (14) présentant des ouvertures de boîtier (A, B, E, F) avec un premier corps de soupape (10) pouvant tourner autour d'un premier axe de rotation et un deuxième cylindre de boîtier (16) présentant des ouvertures de boîtier (C, D, G) avec un deuxième corps de soupape (12) pouvant tourner autour d'un deuxième axe de rotation, les deux axes de rotation étant disposés parallèlement l'un par rapport à l'autre **caractérisée en ce que**
le premier cylindre de boîtier (14) présente un premier plan de boîtier avec le premier corps de soupape (10) le long du premier axe de rotation et un deuxième plan de boîtier sans corps de soupape et **caractérisée en ce que** le deuxième cylindre de boîtier (16) présente au moins un deuxième plan de boîtier avec le deuxième corps de soupape (12) le long du deuxième axe de rotation et **en ce que** les deux cylindres de boîtier (14, 16) sont reliés l'un à l'autre de manière à conduire l'écoulement uniquement au moyen des deuxièmes plans de boîtier.

2. Soupape d'agent de refroidissement (4) selon la revendication 1,
**caractérisée en ce que**
le premier cylindre de boîtier (14) et/ou le deuxième cylindre de boîtier (16), dans la mesure où le deuxième cylindre de boîtier présente un premier et un deuxième plan de boîtier, présentent une liaison conductrice d'écoulement entre le premier et le deuxième plan de boîtier.

3. Soupape d'agent de refroidissement (4) selon la revendication 1 ou 2,
**caractérisée en ce que**
le premier corps de soupape (10) et/ou le deuxième corps de soupape (12) sont conçus de manière cylindrique ou sphérique.

4. Soupape d'agent de refroidissement (4) selon l'une des revendications 1 à 3,
**caractérisée en ce que**
le premier corps de soupape (10) est réalisé, dans une coupe perpendiculaire au premier axe de rotation, au moins partiellement sous la forme d'un profil ouvert d'un côté, de préférence **en ce que** ce profil du premier corps de soupape (10) est réalisé en forme de U.

5. Soupape d'agent de refroidissement (4) selon l'une des revendications 1 à 4,
**caractérisée en ce que**
le deuxième corps de soupape (12) est réalisé, dans une coupe perpendiculaire au deuxième axe de rotation, sous la forme d'un segment d'anneau circulaire, de préférence **en ce que** le segment d'anneau circulaire s'étend autour du deuxième axe de rotation entre une valeur supérieure ou égale à 100° et inférieure ou égale à 180°.

6. Soupape d'agent de refroidissement (4) selon l'une des revendications 1 à 5,
**caractérisée en ce que**
le premier corps de soupape (10) et le premier cylindre de boîtier (14) et/ou le deuxième corps de soupape (12) et le deuxième cylindre de boîtier (16) sont réalisés respectivement de manière adaptée l'un à l'autre de manière à empêcher le passage à un troisième état de la soupape d'agent de refroidissement (4) avec une liaison conductrice d'écoulement indésirable de plusieurs ouvertures de boîtier (A à G) lors d'une rotation du corps de soupape correspondant (10, 12) en vue de faire passer la soupape d'agent de refroidissement (4) d'un premier état de soupape à un deuxième état de soupape lors de la rotation susmentionnée.

7. Soupape d'agent de refroidissement (4) selon l'une des revendications 1 à 6,
**caractérisée en ce que**
le premier corps de soupape (10) et le premier cylindre de boîtier (14) et/ou le deuxième corps de soupape (12) et le deuxième cylindre de boîtier (16) sont respectivement adaptés l'un par rapport à l'autre de telle sorte qu'un degré d'ouverture d'au moins une des ouvertures de boîtier (D) peut être réglé en fonction de la rotation du corps de soupape (12) correspondant.

8. Système de refroidissement (2) d'un véhicule automobile comprenant au moins une soupape d'agent de refroidissement (4) et plusieurs conduites de liquide de refroidissement (6) reliées de manière conduire l'écoulement avec les ouvertures de boîtier (A à G) de la soupape d'agent de refroidissement (4), au moins deux des conduites de liquide de refroidissement (6) pouvant être reliées automatiquement entre elles de manière à conduire l'écoulement au moyen de la soupape d'agent de refroidissement (4),
**caractérisé en ce que**
au moins une soupape d'agent de refroidissement (4) est réalisée selon l'une des revendications 1 à 7.

9. Système de refroidissement (2) selon la revendication 8,
**caractérisé en ce que**
au moins une soupape d'agent de refroidissement (4) est réalisée sous la forme d'une seule soupape d'agent de refroidissement.

10. Véhicule automobile comprenant un système de refroidissement (2),
**caractérisé en ce que**
le système de refroidissement (2) est réalisé selon la revendication 8 o
